# DEMANDE DE BREVET EUROPEEN

(11) **EP 1 065 406 A1**
(43) Date de publication de la demande: **03.01.2001**
(21) Numéro de dépôt: 00420139.8
(22) Date de dépôt: 26.06.2000
(51) Int. Cl.: F16G 13/06

(54) **Chaîne d'entraînement, notamment pour moteur, système de distribution et moteur équipés d'une telle chaîne**

(30) Priorité: 28.06.1999 FR 9908431
(71) Demandeur: Sachs Automotive France SA, 38870 Saint Simeon de Bressieux (FR)
(72) Inventeur: Husson, Michel, 38260 Saint Hilaire de la Cote (FR)
(74) Mandataire: Myon, Gérard Jean-Pierre

(57) **Abrégé**

Cette chaîne d'entraînement, notamment pour moteur, comprend des maillons formés de plaquettes extérieures (4) et de plaquettes intérieures (14) reliées deux à deux respectivement par des axes (6) et des douilles (16), les axes (6) étant disposés à l'intérieur des douilles (16), un rouleau (26) étant disposé autour de chaque douille (16) alors que le rouleau (26) et la douille (26) sont percés d'au moins un orifice radial (17, 27) de passage d'un lubrifiant. Elle est caractérisée en ce que les orifices radiaux (17, 27) sont aptes à être alignés l'un avec l'autre alors que l'orifice (17) ménagé dans la douille (16) est orienté selon une direction globalement perpendiculaire à la direction d'avance de la chaîne, du côté de son centre de courbure.

## Description

L'invention a trait à une chaîne d'entraînement, notamment pour un moteur, et un moteur équipé d'une telle chaîne.

Une chaîne d'entraînement peut être utilisée, de façon générale, pour la transmission de puissance, notamment pour un moteur de véhicule automobile, tel qu'un moteur à combustion interne. Une chaîne d'entraînement est généralement constituée de maillons intérieurs et de maillons extérieurs, ces maillons étant eux même formés de deux plaques convenablement découpées, traitées ou non. Deux plaques dites extérieures sont reliées entre elles par des axes cylindriques et forment les maillons extérieurs. Deux plaques dites intérieures sont reliées par des douilles disposées autour des axes précités et forment les maillons dits intérieurs. Autour de chaque douille et entre les plaques intérieures est disposé un rouleau qui peut tourner librement par rapport à la douille et est prévu pour venir en appui sur les dentures des pignons d'entraînement ou de renvoi de la chaîne.

Pour éviter un grippage de la chaîne, il est connu de la faire barboter dans un bain d'huile, en supposant que l'huile pénètre entre les pièces en mouvement, notamment entre les rouleaux et les douilles d'une part et entre les douilles et les axes d'autre part. Cependant, les huiles modernes sont de plus en plus fluides et n'ont pas tendance à rester dans les interstices entre les parties en mouvement, d'où un risque de rupture du film d'huile entre ces pièces.

Pour pallier ces inconvénients, il est connu, notamment de EP-A-0 257 661, de ménager des orifices de passage d'huile dans les douilles d'une chaîne alors que des éléments d'écartement sont prévus au niveau d'un rouleau disposé autour de la chaîne. Une ouverture de dimension relativement importante est ainsi créée au niveau de chaque extrémité du rouleau, de telle sorte que l'huile, éventuellement présente entre le rouleau et la chaîne, est chassée par les accélérations qu'elle subit, notamment les accélérations centrifuges au niveau des pignons.

Par ailleurs, US-A-2,056,597 divulgue une chaîne munie de douilles et de rouleaux percés. Les orifices des douilles sont orientés selon la direction d'avance de la chaîne, de sorte que le volume intérieur de ces doulles ne peut pas être effectivement gravé à travers ces orifices. En outre, l'orifice des rouleaux est disposé à distance de ceux des douilles, au point que l'huile de lubrification ne peut traverser successivement ces deux types d'orifices.

C'est à ces inconvénients qu'entend plus particulièrement remédier l'invention, en proposant une nouvelle structure de chaîne qui permet l'alimentation en lubrifiant des interstices définis entre les pièces de mouvement des maillons, tels que les axes, les douilles et les rouleaux, alors que le lubrifiant n'a pas tendance à s'échapper trop rapidement de ces interstices, y compris en cas d'utilisation d'une huile très fluide.

Dans cet esprit, l'invention concerne une chaîne d'entraînement, notamment pour moteur, comprenant des maillons formés de plaquettes extérieures et de plaquettes intérieures reliées deux à deux respectivement par des axes et des douilles, les axes étant disposés à l'intérieur des douilles, alors qu'un rouleau est disposé autour de chaque douille et que ce rouleau et cette douille sont percés chacun d'au moins un orifice radial de passage d'un lubrifiant. Cette chaîne est caractérisée en ce que les orifices radiaux précités de la douille et du rouleau sont aptes à être alignés l'un avec l'autre alors que l'orifice ménagé dans la douille est orienté selon une direction globalement perpendiculaire à la direction d'avance de la chaîne, du côté de son centre de courbure.

Grâce à l'invention, un lubrifiant, telle qu'une huile, peut être introduit dans les espaces annulaires ménagés, d'une part, entre le rouleau et la douille correspondante et, d'autre part, entre la douille et l'axe correspondant, alors que le rouleau peut s'étendre jusqu'à proximité immédiate des plaques intérieures, de telle sorte que l'huile reste confinée dans cet espace intérieur. L'invention permet donc de réaliser une sorte de "gavage" de ces espaces annulaires intérieurs, ce qui assure en permanence la présence d'un film d'huile entre le rouleau, la douille et l'axe. Lorsque l'orifice du rouleau est aligné avec celui de la douille, le lubrifiant peut être introduit dans les deux orifices grâce à la force centrifuge générée au niveau d'un pignon d'entraînement ou de renvoi de la chaîne.

Selon un aspect avantageux de l'invention, l'orifice est ménagé dans une zone centrale du rouleau, entre ses extrémités. Ce positionnement permet une répartition régulière de l'huile en aval de l'orifice.

Selon un autre aspect avantageux, l'orifice de la douille peut être ménagé dans une zone centrale de cette douille, entre ses extrémités.

Selon un autre aspect avantageux, l'orifice du rouleau et celui de la douille sont aptes à être disposés en regard d'un canal radial d'amenée d'un lubrifiant débouchant dans une denture d'un pignon d'entraînementou de renvoi. Cette construction permet une alimentation des interstices des maillons en utilisant la force centrifuge générée au niveau du pignon.

On peut prévoir que le rouleau s'étend globalement sur toute la longueur de la douille, entre les plaquettes intérieures.

On peut également prévoir que le rouleau se prolonge jusqu'au voisinage immédiat des plaquettes intérieures et/ou que la douille se prolonge jusqu'à l'intérieur de perçages prévus dans ces plaquettes. En outre, la douille peut être pourvue d'un unique orifice radial, ce qui évite que les forces centrifuge ne chasse l'huile comprise dans l'interstice défini entre la douille et l'axe, comme ce serait le cas si deux orifices diamétralement opposés étaient prévus.

L'invention concerne également un système de distribution pour moteur, par exemple un système d'entraînement d'arbre à cames en synchronisme avec un vilbrequin, qui comprend une chaîne telle que précédemment décrite. Un tel système a une durée de vie sensiblement augmentée par rapport à celle des systèmes connus grâce à l'optimisation de la lubrification de sa chaîne.

L'invention concerne enfin un moteur, notamment un moteur à combustion interne, équipé d'une chaîne telle que précédemment décrite. Un tel moteur fonctionne dans des conditions optimisées, y compris en cas d'utilisation d'un lubrifiant très fluide.

L'invention sera mieux comprise et d'autres avantages de celle-ci apparaîtront plus clairement à la lumière de la description qui va suivre d'un mode de réalisation d'une chaîne conforme à sont principe, donnée uniquement à titre d'exemple et faite en référence aux dessins annexés dans lesquels :
- la figure 1 est une représentation en perspective, avec arrachement partiel, d'un tronçon d'une chaîne conforme à l'invention ;

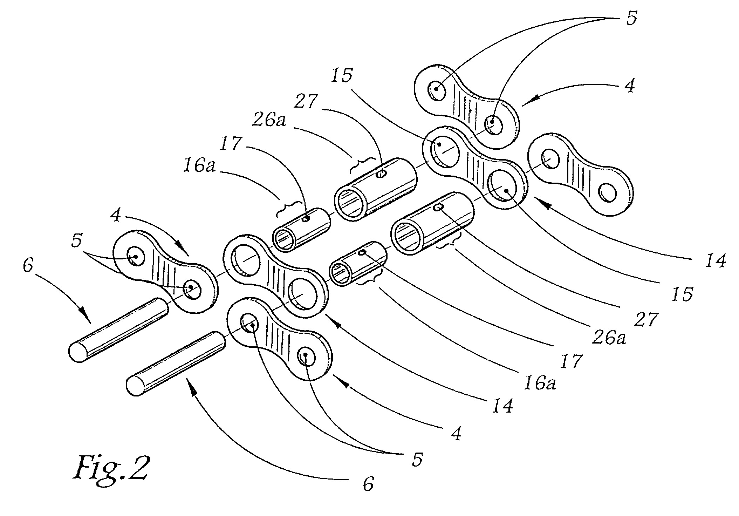

- la figure 2 est une vue en perspective éclatée de certains des éléments constitutifs de la chaîne de la figure 1 ;
- la figure 3 est une représentation schématique de principe d'une configuration d'utilisation de la chaîne des figures 1 et 2 dans un moteur thermique de véhicule automobile et
- la figure 4 est une coupe longitudinale du détail IV à la figure 3.

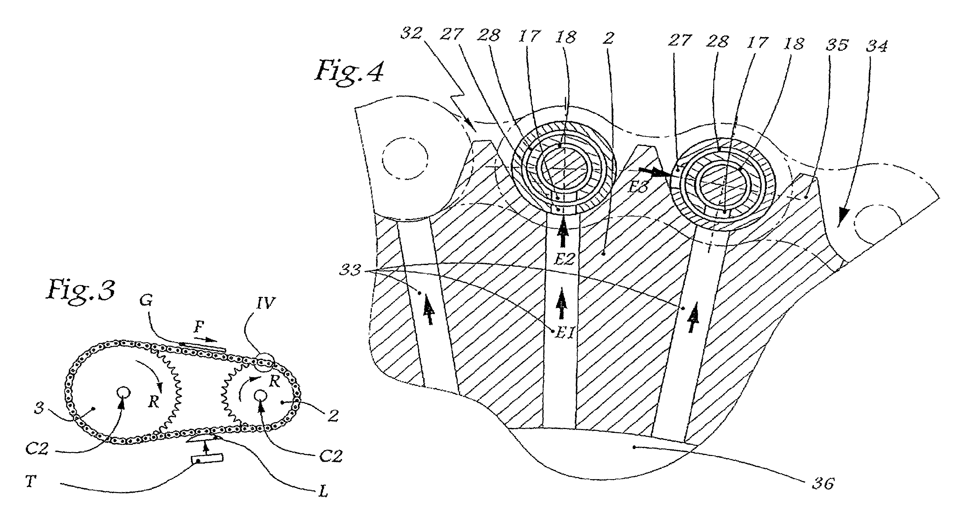

La chaîne 1 représentée sur les figures est destinée à être utilisée dans un moteur à combustion interne de véhicule automobile, entre un pignon menant 2 et un pignon mené 3, comme représenté à la figure 3. Les pignons 2 et 3 ont un mouvement de rotation R tel que la chaîne se déplace dans le sens de la flèche F, en suivant un guide fixe G alors que son brin mou subit l'action d'un tendeur F poussant élastiquement une lame L.

La chaîne 1 est formée de maillons intérieurs et de maillons extérieurs disposés alternativement. Les maillons extérieurs comprennent des plaquettes extérieures 4, réalisées en acier et convenablement découpées, traitées ou non. Ces plaquettes sont chacune pourvues de deux perçages 5 dans lesquels sont emmanchés deux axes cylindriques, pleins ou creux, un axe 6 étant solidaire de deux plaquettes 4 en regard. Les axes 6 sont emmanchés avec serrage ou rivetés sur les plaquettes 4.

Des plaquettes intérieurs 14 sont également chacune pourvues de deux perçages 15, alors que des douilles 16 sont prévues pour être emmanchées dans les perçages 15, au niveau de leurs extrémités. Les douilles 16 sont prévues pour être disposées autour des axes 6.

Un rouleau 26 est prévu autour de chaque douille 16, le rouleau 26 pouvant tourner librement sur la douille 16 qu'il entoure et s'étendant jusqu'au voisinage immédiat des plaquettes 14.

Ainsi, les articulations de la chaîne 1 comprennent chacune un axe 6 solidaire de deux plaquettes 4, une douille 16, solidaire de deux plaquettes 14 et entourant l'axe 6, et un rouleau 26 entourant la douille 16.

Chaque rouleau 26 est pourvu, dans sa zone centrale 26a, d'un orifice 27 de passage d'un lubrifiant tel que de l'huile. Ainsi, l'espace annulaire 28 qui existe nécessairement entre le rouleau 26 et la douille 16 associée peut être gavé d'huile. L'huile peut se répartir facilement à l'intérieur de l'espace 28, cette répartition étant facilitée par les mouvements de rotation du rouleau 26 autour de la douille 16.

Par ailleurs, chaque douille 16 est pourvue, dans sa zone centrale 16a, d'un orifice 17 de passage d'huile de lubrification, ce qui permet de mettre en communication l'espace 28 qui contient de l'huile et un espace annulaire 18 défini entre la douille 16 et l'axe 6 qu'elle entoure.

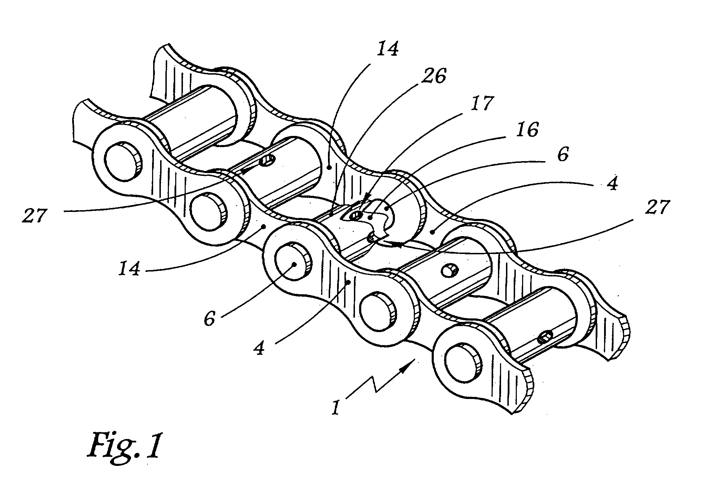

L'orifice 17 de chaque douille 16 est orienté selon une direction globalement perpendiculaire à la direction d'avance F de la chaîne 1 et vers l'intérieur de cette chaîne, c'est-à-dire en direction de son centre de courbure lorsqu'il existe, c'est-à-dire en particulier des centres C₂ et C₃ des pignons 2 et 3. L'orientation des orifices 17 peut être imposée, car les douilles 16 ont une orientation fixe par rapport aux plaquettes intérieures 14 dont elles sont solidaires. Ainsi, dans la fraction de la chaîne 1 représentée à la figure 1 qui correspond au brin inférieur de celle-ci sur la figure 3, les orifices 17 des différentes douilles 16 sont tous orientés vers le haut.

Grâce à cette répartition, et comme il ressort plus clairement de la figure 4, les orifices 17 des douilles 16 sont dirigés vers le fond de la dentures 32 du pignon 2. On peut prévoir que ce pignon est équipé de canaux radiaux 33 débouchant au fond de chacun des espaces 34 définis entre les dents 35 de la denture 32, ces canaux 33 étant en communication avec une partie centrale 36 du pignon 2 formant réservoir et répartiteur d'huile. Ainsi, en cours de rotation R du pignon 2, la force centrifuge exercée sur l'huile crée un écoulement E₁ à l'intérieur des canaux 33 en direction des rouleaux 26 et des douilles 16.

Compte tenu de leur libre rotation autour des axes 6 et des douilles 16, les rouleaux 26 ont une orientation aléatoire par rapport à la direction d'avance de la chaîne, ce qui apparaît avec l'orientation variable des orifices 27 représentés à la figure 1.

Il s'avère en pratique qu'avec un pignon 2 tournant à une vitesse de l'ordre de 1 000 tours à la minute, l'orifice 27 de chaque rouleau 26 est orienté une fois sur quatre en direction du fond d'un espace 34 du pignon 2, de telle sorte que les orifices 17 et 27 sont alors alignés, comme représenté au centre de la figure 4. Dans ces conditions, l'écoulement d'huile E₁ se prolonge à travers les orifices 27 et 17, comme représenté par la flèche E₂, ce qui permet d'injecter de l'huile à la fois dans les espaces 28 et 18, cette huile étant sous pression du fait de la force centrifuge qu'elle subit.

Une fois répartie dans les espaces 28 et 18, l'huile n'a pas tendance à s'échapper trop rapidement, car la douille 16 se prolonge jusqu'à l'intérieur des orifices 15, et car le rouleau 26 se prolonge jusqu'au voisinage immédiat des plaquettes 14.

Lorsque les orifices 17 et 27 ne sont pas alignés, comme représenté sur la droite de la figure 4, l'huile demeure à l'intérieur des espaces 18 et 28 qui sont en communication grâce à l'orifice 17, une partie de l'huile présente dans l'espace 34 pouvant s'écouler à travers l'orifice 27, comme représenté par la flèche E₃.

En tout état de cause, aux vitesses de rotation habituelles d'un moteur, l'orientation aléatoire des orifices 27 par rapport à la denture 32 varie suffisamment souvent pour qu'un gavage des espaces 18 et 28 ait lieu de façon régulière, ce qui permet d'éviter toute rupture du film d'huile.

Lorsque le rouleau est dans la configuration de la partie centrale de la figure 4, il permet d'éviter un phénomène dit "de succion" en fond de denture au cours duquel il est créé un effet ventouse du fait de l'écrasement du film d'huile. En effet, dans cette configuration, un tel phénomène ne se produit pas car l'huile circule à travers le canal 33 et l'orifice 27, ce qui permet de limiter les efforts de cisaillement générés au niveau des dentures des pignons 2 et 3.

## Revendications

1. Chaîne d'entraînement, notamment pour moteur, comprenant des maillons formés de plaquettes extérieures (4) et de plaquettes intérieures (14) reliées deux à deux respectivement par des axes (6) et des douilles (16), lesdits axes étant disposés à l'intérieur desdites douilles, un rouleau (26) étant disposé autour de chaque douille, ledit rouleau et ladite douille étant percés chacun d'au moins un orifice radial (17, 27) de passage d'un lubrifiant, caractérisée en ce que lesdits orifices radiaux sont aptes à être alignés l'un avec l'autre, alors que ledit orifice (17) ménagé dans ladite douille (16) est orienté selon une direction globalement perpendiculaire à la direction (F) d'avance de ladite chaîne, du côté du centre de courbure (C₂, C₃) de ladite chaîne.

2. Chaîne selon la revendication 1, caractérisée en ce que ledit orifice (27) est ménagé dans une zone centrale (26a) dudit rouleau (27), entre ses extrémités.

3. Chaîne selon l'une des revendications 1 ou 2, caractérisée en ce que ledit orifice (17) est ménagé dans une zone centrale (16a) de ladite douille (16), entre ses extrémités.

4. Chaîne selon l'une des revendications précédentes, caractérisée en ce que ledit orifice (27) dudit rouleau (26), et ledit orifice (17) de ladite douille (16) sont aptes à être disposés en regard d'un canal radial (33) d'amenée de lubrifiant débouchant dans une denture (32) d'un pignon (2, 3) d'entraînement ou de renvoi de ladite chaîne (1).

5. Chaîne selon l'une des revendications précédentes, caractérisée en ce que ledit rouleau (26) s'étend globalement sur toute la longueur de ladite douille (16), entre lesdites plaquettes intérieures (14).

6. Chaîne selon l'une des revendications précédentes, caractérisée en ce que ledit rouleau (26) se prolonge jusqu'au voisinage immédiat desdites plaquettes intérieures (14).

7. Chaîne selon l'une des revendications précédentes, caractérisée en ce que ladite douille (16) se prolonge jusqu'à l'intérieur de perçages (15) prévus dans lesdites plaquettes intérieures (14).

8. Chaîne selon l'une des revendications précédentes, caractérisée en ce que ladite douille (16) est pourvue d'un unique orifice radial (17) de passage de lubrifiant.

9. Système de distribution pour moteur, caractérisé en ce qu'il comprend une chaîne (1) selon l'une des revendications précédentes.

10. Moteur, notamment moteur à combustion interne, équipé d'une chaîne (1) selon l'une des revendications 1 à 8.
